# EUROPEAN PATENT APPLICATION

(11) **EP 4 325 417 A1**
(43) Date of publication of application: **21.02.2024**
(21) Application number: 22787632.3
(22) Date of filing: 15.04.2022
(51) Int. Cl.: G06Q 40/04

(54) **DIGITAL CURRENCY EXPORT METHOD, RECHARGING METHOD, APPARATUS, AND SYSTEM**

(30) Priority: 16.04.2021 CN 202110414094; 16.04.2021 CN 202110412668
(71) Applicant: Digital Currency Institute, The People's Bank of China, Beijing 100071 (CN)
(72) Inventor: DI, Gang, Beijing 100071 (CN); MU, Changchun, Beijing 100071 (CN); ZHAO, Xinyu, Beijing 100071 (CN); CUI, Peidong, Beijing 100071 (CN); DU, Jinli, Beijing 100071 (CN); SHI, Zhan, Beijing 100071 (CN)
(74) Representative: Casalonga
(86) International application number: PCT/CN2022/087074
(87) International publication number: WO 2022/218410

(57) **Abstract**

Disclosed are a method, apparatus and system for exporting and recharging a digital currency, which mainly relate to the technical field of computers. The method includes: receiving a generation request of a digital currency sent by a digital currency terminal, wherein the generation request indicates a first denomination of the requested digital currency and user information corresponding to the digital currency terminal (S101); determining, according to the user information, an available currency corresponding to the user information and a second denomination of the available currency (S102); generating, according to the available currency and the second denomination of the available currency, the digital currency corresponding to the user information and the first denomination, and recording a status of the digital currency as an export status (S103), and notifying the digital currency terminal of the digital currency in the export status (S104). The method securely and effectively exports and recharges the digital currency, and facilitates the circulation of the digital currency.

## Description

### Cross-Reference to Related Application

The disclosure claims priority to Chinese patent application No. 202110414094.7, filed on April, 16, 2021 and entitled "Method, Apparatus, and System for Exporting Digital Currency", and Chinese patent application No. 202110412668.7, filed on April, 16, 2021 and entitled "Method, Apparatus, and System for Recharging Digital Currency", the disclosures of which are hereby incorporated by reference in their entirety

### Technical Field

The present disclosure relates to the technical field of computers, and in particular to a method, an apparatus, and a system for exporting and recharging a digital currency.

### Background

In the era of digital economy, a digital currency is increasingly attracting the attention of banks and consumers worldwide due to its low cost and convenience.

The premise for the consumers to use the digital currency is to export the digital currency from a currency management agency or generate the digital currency according to an available currency in the form of non-digital currency (such as recharging the available currency in the form of non-digital currency to form the digital currency). At present, there is no secure and effective method for exporting and recharging a digital currency, thus not facilitating the circulation of the digital currency.

### Summary

in view of this, embodiments of the present disclosure provide a method, an apparatus, and a system for exporting and recharging a digital currency, which securely and effectively export and recharge a digital currency, and facilitate the circulation of the digital currency, thereby improving the user experience of using the digital currency.

In order to achieve the above objective, according to an aspect of the embodiments of the present disclosure, a method for exporting a digital currency is provided.

The method for exporting the digital currency of the embodiments of the present disclosure includes the following operations.

A generation request of a digital currency sent by a digital currency terminal is received. The generation request indicates a first denomination of the requested digital currency and user information corresponding to the digital currency terminal.

An available currency corresponding to the user information and a second denomination of the available currency are determined according to the user information.

The digital currency corresponding to the user information and the first denomination is generated according to the available currency and the second denomination of the available currency, and a status of the digital currency is recorded as an export status.

The digital currency terminal is notified of the digital currency in the export status.

As at least one alternative embodiment, the operation that the digital currency terminal is notified of the digital currency in the export status includes the following operation.

A circulation identifier of the digital currency is generated, and the digital currency terminal is notified of the circulation identifier.

As at least one alternative embodiment, the method further includes the following operations.

A currency encryption prompt is sent to the digital currency terminal according to the generation request.

A first encryption instruction sent by the digital currency terminal according to the currency encryption prompt is received, the digital currency and/or the circulation identifier arelis encrypted according to the first encryption instruction, and the digital currency terminal is notified of the encrypted digital currency and/or the encrypted circulation identifier.

As at least one alternative embodiment, the first encryption instruction indicates an encryption method of the digital currency and a key corresponding to the encryption method, and the operation that the digital currency and/or the circulation identifier arelis encrypted according to the first encryption instruction includes the following operation.

The digital currency and/or the circulation identifier arelis encrypted according to the encryption method by using the key corresponding to the encryption method.

As at least one alternative embodiment, the operation that the digital currency corresponding to the user information and the first denomination is generated includes the following operation.

A generation method of the digital currency is determined according to the second denomination of the available currency and the first denomination, and the digital currency corresponding to the first denomination is generated according to the generation method.

As at least one alternative embodiment, the operation that the generation method of the digital currency is determined according to the second denomination of the available currency and the first denomination includes the following operation.

When one of the second denominations of the available currency is equal to the first denomination, the generation method is to identify the available currency with the second denomination equal to the first denomination as the requested digital currency.

As at least one alternative embodiment, the operation that the generation method of the digital currency is determined according to the second denomination of the available currency and the first denomination includes the following operation.

The generation method is to split the available currency with the second denomination greater than the first denomination.

As at least one alternative embodiment, the available currency with the second denomination greater than the first denomination is split into a first currency and a second currency, the sum of denominations of the first currency and the second currency is equal to the second denomination of the available currency, the denomination of the first currency is equal to the first denomination, and the first currency is identified as the requested digital currency.

As at least one alternative embodiment, the operation that the generation method of the digital currency is determined according to the second denomination of the available currency and the first denomination includes the following operation.

The generation method is to combine a plurality of available currencies with the second denominations less than the first denomination.

As at least one alternative embodiment, the requested digital currency is generated according to the combined plurality of available currencies.

In order to achieve the above objective, according to another aspect of the embodiments of the present disclosure, a method for exporting a digital currency is provided.

The method for exporting a digital currency of the embodiments of the present disclosure includes that: a generation request of a digital currency is generated, and the generation request is sent to a currency management apparatus. The generation request indicates a first denomination of the requested digital currency and user information.

The digital currency returned by the currency management apparatus is received. The digital currency is generated according to the first denomination and the user information indicated by the generation request.

As at least one alternative embodiment, a circulation identifier of the digital currency returned by the currency management apparatus is received.

As at least one alternative embodiment, the method further includes that: the digital currency and/or the circulation identifier of the digital currency arelis encrypted according to a second encryption instruction entered by a user.

In order to achieve the above objective, according to yet another aspect of the embodiments of the present disclosure, a currency management apparatus is provided.

The currency management apparatus of the embodiments of the present disclosure includes a request receiving module, an available currency determination module, and a currency generation module.

The request receiving module is configured to receive a generation request of a digital currency sent by a digital currency terminal. The generation request indicates a first denomination of the requested digital currency and user information corresponding to the digital currency terminal.

The available currency determination module is configured to determine, according to the user information, an available currency corresponding to the user information and a second denomination of the available currency.

The currency generation module is configured to generate, according to the available currency and the second denomination of the available currency, the digital currency corresponding to the user information and the first denomination, record a status of the digital currency as an export status, and notify the digital currency terminal of the digital currency in the export status.

In order to achieve the above objective, according to yet another aspect of the embodiments of the present disclosure, a digital currency terminal is provided.

A digital currency terminal of the embodiments of the present disclosure includes a request sending module and a currency receiving module.

The request sending module is configured to generate a generation request of a digital currency, and send the generation request to a currency management apparatus. The generation request indicates a first denomination of the requested digital currency and user information corresponding to the digital currency terminal.

The currency receiving module is configured to receive the digital currency returned by the currency management apparatus. The digital currency is generated according to the first denomination and the user information indicated by the generation request.

In order to achieve the above objective, according to yet another aspect of the embodiments of the present disclosure, a system for exporting a digital currency is provided.

The system for exporting a digital currency of the embodiments of the present disclosure includes any one of the above currency management apparatuses and any one of the above digital currency terminals.

The digital currency management terminal is configured to send a generation request of a digital currency to the currency management apparatus. The generation request indicates a first denomination of the requested digital currency and user information corresponding to the digital currency terminal.

The currency management apparatus is configured to generate, according to the generation request, the digital currency corresponding to the first denomination and the user information, and notify the digital currency management terminal of the digital currency.

In order to achieve the above objective, according to yet another aspect of the embodiments of the present disclosure, an electronic device for exporting a digital currency is provided.

The electronic device for exporting the digital currency of the embodiments of the present disclosure includes: one or more processors and a storage apparatus, configured to store one or more programs. The one or more programs are executed by the one or more processors to cause the one or more processors to perform the method for exporting the digital currency of the embodiments of the present disclosure.

In order to achieve the above objective, according to still another aspect of the embodiments of the present disclosure, a computer-readable storage medium is provided.

The computer program is stored on a computer-readable storage medium of the embodiments of the present disclosure. The computer-program is executed by a processor to perform the method for exporting the digital currency of the embodiments of the present disclosure.

In order to achieve the above objective, according to another aspect of the embodiments of the present disclosure, a method for recharging a digital currency is provided.

The method for recharging the digital currency of the embodiments of the present disclosure includes the following operations.

A recharging request of a digital currency sent by a first program or a second program is received. The recharging request indicates a first denomination of the requested digital currency and user information corresponding to the first program or the second program. The first program maintains the digital currency, and the first program maintains an available currency corresponding to the user information.

The available currency corresponding to the user information and a second denomination of the available currency are determined according to the user information.

The digital currency corresponding to the user information and the first denomination is generated according to the available currency and the second denomination of the available currency.

The first program is notified of the generated digital currency.

As at least one alternative embodiment, when the recharging request further indicates at least one digital currency in the first program, and a third denomination respectively corresponds to the at least one digital currency, the operation that the first program is notified of the generated digital currency includes the following operation.

The at least one digital currency in the first program and the digital currency generated according to the available currency are combined into a new digital currency, and the first program is notified of the new digital currency. A denomination of the new digital currency is the sum of the second denomination and the third denomination respectively corresponding to the at least one digital currency.

As at least one alternative embodiment, when the recharging request is sent by the second program, the second program is notified of the generated digital currency, so that the second program notifies the first program of the digital currency.

As at least one alternative embodiment, the operation that the digital currency corresponding to the user information and the first denomination is generated includes the following operation.

A generation method of the digital currency is determined according to the second denomination of the available currency and the first denomination, and the digital currency corresponding to the first denomination is generated according to the generation method.

As at least one alternative embodiment, the operation that the generation method of the digital currency is determined according to the second denomination of the available currency and the first denomination includes the following operation.

When one of the second denominations of the available currency is equal to the first denomination, the generation method is to identify the available currency with the second denomination equal to the first denomination as the requested digital currency.

As at least one alternative embodiment, the operation that the generation method of the digital currency is determined according to the second denomination of the available currency and the first denomination includes the following operation.

The generation method is to split the available currency with the second denomination greater than the first denomination.

As at least one alternative embodiment, the available currency with the second denomination greater than the first denomination is split into a first currency and a second currency, the sum of denominations of the first currency and the second currency is equal to the second denomination of the available currency, the denomination of the first currency is equal to the first denomination, and the first currency is identified as the requested digital currency.

As at least one alternative embodiment, the operation that the generation method of the digital currency is determined according to the second denomination of the available currency and the first denomination includes the following operation.

The generation method is to combine a plurality of available currencies with the second denominations less than the first denomination.

As at least one alternative embodiment, the requested digital currency is generated according to the combined plurality of available currencies.

In order to achieve the above objective, according to another aspect of the embodiments of the present disclosure, a method for recharging a digital currency is provided.

The method for recharging the digital currency of the embodiments of the present disclosure includes that: a recharging request of a digital currency is generated, and the generation request is sent to a currency management apparatus. The recharging request indicates a first denomination of the requested digital currency and user information.

The digital currency is received. The digital currency is generated according to the first denomination and the user information indicated by the generation request.

In order to achieve the above objective, according to yet another aspect of the embodiments of the present disclosure, a currency management apparatus is provided.

The currency management apparatus of the embodiments of the present disclosure includes a request receiving module, an available currency determination module, and a currency generation module.

The request receiving module is configured to receive a recharging request of a digital currency sent by a first program or a second program. The recharging request indicates a first denomination of the requested digital currency and user information corresponding to the first program or the second program. The first program maintains the digital currency, and the first program maintains an available currency corresponding to the user information.

The available currency determination module is configured to determine, according to the user information, the available currency corresponding to the user information and a second denomination of the available currency.

The currency generation module is configured to generate, according to the available currency and the second denomination of the available currency, the digital currency corresponding to the user information and the first denomination, and notify the first program of the generated digital currency.

In order to achieve the above objective, according to yet another aspect of the embodiments of the present disclosure, a digital currency terminal is provided.

The digital currency terminal of the embodiments of the present disclosure includes a first program and a second program.

The first program is configured to generate, when being triggered, a recharging request of a digital currency, and send the recharging request to a currency management apparatus, the recharging request indicating a first denomination of the requested digital currency and user information; and receive the digital currency returned by the currency management apparatus according to the recharging request, and maintain the digital currency.

The second program is configured to maintain an available currency corresponding to the user information; and generate, when being triggered, the recharging request of the digital currency, and send the recharging request to the currency management apparatus. The recharging request indicates the first denomination of the requested digital currency and the user information.

In order to achieve the above objective, according to yet another aspect of the embodiments of the present disclosure, a system for recharging a digital currency is provided.

The system for recharging a digital currency of the embodiments of the present disclosure includes any one of the above currency management apparatuses and any one of the above digital currency terminals.

The digital currency management terminal is configured to send a recharging request of a digital currency to the currency management apparatus. The recharging request indicates a first denomination of the requested digital currency and user information corresponding to the digital currency terminal.

The currency management apparatus is configured to generate, according to the generation request, the digital currency corresponding to the first denomination and the user information, and notify a first program for managing the digital currency in the digital currency terminal of the digital currency.

In order to achieve the above objective, according to yet another aspect of the embodiments of the present disclosure, an electronic device for recharging a digital currency is provided.

The electronic device for recharging the digital currency of the embodiments of the present disclosure includes: one or more processors; and a storage apparatus, configured to store one or more programs. The one or more programs are executed by the one or more processors to cause the one or more processors to perform the method for recharging the digital currency of the embodiments of the present disclosure.

In order to achieve the above objective, according to still another aspect of the embodiments of the present disclosure, a computer-readable storage medium is provided.

A computer program is stored on a computer-readable storage medium of the embodiments of the present disclosure. The computer-program is executed by a processor to perform the method for recharging the digital currency of the embodiments of the present disclosure.

One embodiment of the above disclosure has the following advantages or beneficial effects: a user may send the generation request of the digital currency to the currency management apparatus through the digital currency terminal, and the currency management apparatus may determine, according to the user information indicated by the generation request, the available currency corresponding to the user information and the second denomination of the available currency. The currency management apparatus may generate, according to the available currency and the second denomination of the available currency, the digital currency corresponding to the first denomination of the requested digital currency and the user information of the digital currency terminal, and notify the digital currency terminal of the generated digital currency. Therefore, the digital currency terminal securely and effectively exports the digital currency from the currency management apparatus, which facilitates the user of the digital currency terminal to use the exported digital currency, facilitates the circulation of the digital currency, and improves the user experience of using the digital currency.

In addition, the user may send the recharging request of the digital currency to the currency management apparatus through the first program for maintaining the digital currency or the second program for maintaining the available currency. The currency management apparatus may determine, according to the user information indicated by the recharging request, the available currency corresponding to the user information and the second denomination of the available currency. The currency management apparatus may generate, according to the available currency and the second denomination of the available currency, the digital currency corresponding to the first denomination of the requested digital currency and the user information of the digital currency terminal, and notify the first program for maintaining the digital currency of the generated digital currency. Therefore, the available currency is securely and effectively recharged into the digital currency, which facilitates the user of the first program or the second program to use the digital currency formed by recharging, facilitates the circulation of the digital currency, and improves the user experience of using the digital currency.

Further effects of the above non-conventional alternatives are described below with reference to the specific implementations.

### Brief Description of the Drawings

The drawings are used for a better understanding of the present disclosure, and do not constitute improper limitations to the present disclosure. Herein.
Fig. 1 is a schematic diagram of main steps of a method for exporting a digital currency according to an embodiment of the present disclosure.
Fig. 2 is a schematic diagram of main steps of another method for exporting a digital currency according to an embodiment of the present disclosure.
Fig. 3 is a schematic diagram of main steps of yet another method for exporting a digital currency according to an embodiment of the present disclosure.
Fig. 4 is a schematic diagram of main steps of still another method for exporting a digital currency according to an embodiment of the present disclosure.
Fig. 5 is a schematic diagram of main steps of still another method for exporting a digital currency according to an embodiment of the present disclosure.
Fig. 6 is a schematic diagram of main steps of an application method of a system for exporting a digital currency according to an embodiment of the present disclosure.
Fig. 7 is a schematic diagram of main modules of a currency management apparatus according to an embodiment of the present disclosure.
Fig. 8 is a schematic diagram of main modules of a digital currency terminal according to an embodiment of the present disclosure.
Fig. 9 is a schematic diagram of main modules of a system for exporting a digital currency according to an embodiment of the present disclosure.
Fig. 10 is a schematic diagram of main steps of a method for recharging a digital currency according to an embodiment of the present disclosure.
Fig. 11 is a schematic diagram of main steps of another method for recharging a digital currency according to an embodiment of the present disclosure.
Fig. 12 is a schematic diagram of main steps of yet another method for recharging a digital currency according to an embodiment of the present disclosure.
Fig. 13 is a schematic diagram of main steps of still another method for recharging a digital currency according to an embodiment of the present disclosure.
Fig. 14 is a schematic diagram of main steps of still another method for recharging a digital currency according to an embodiment of the present disclosure.
Fig. 15 is a schematic diagram of main steps of an application method of a system for recharging a digital currency according to an embodiment of the present disclosure.
Fig. 16 is a schematic diagram of main modules of a currency management apparatus according to an embodiment of the present disclosure.
Fig. 17 is a schematic diagram of main modules of a digital currency terminal according to an embodiment of the present disclosure.
Fig. 18 is a schematic diagram of main modules of a system for recharging a digital currency according to an embodiment of the present disclosure.
Fig. 19 is a diagram of an exemplary system architecture in which an embodiment of the present disclosure may be applied.
Fig. 20 is a schematic structural diagram of a computer system suitable for implementing a terminal device or a server according to an embodiment of the present disclosure.

### Detailed Description of the Embodiments

Exemplary embodiments of the present disclosure are described in detail below with reference to the drawings, including various details of the embodiments of the present disclosure to facilitate understanding, and should be regarded as merely exemplary. Thus, those of ordinary skilled in the art shall understand that, variations and modifications may be made on the embodiments described herein, without departing from the scope and spirit of the present disclosure. Likewise, for clarity and conciseness, descriptions of well-known functions and structures are omitted in the following description.

It is to be noted that the embodiments of the present disclosure and features in the embodiments may be combined with each other without conflict.

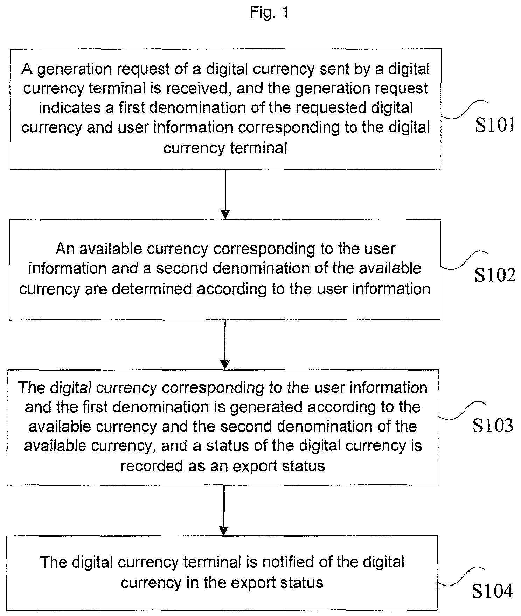

Fig. 1 is a schematic diagram of main steps of a method for exporting a digital currency when applied to a currency management apparatus according to an embodiment of the present disclosure.

As shown in Fig. 1, the method for exporting the digital currency of the embodiments of the present disclosure includes the following steps.

At S101, a generation request of a digital currency sent by a digital currency terminal is received. The generation request indicates a first denomination of the requested digital currency and user information corresponding to the digital currency terminal.

According to the export demand for digital currency, a user of the digital currency terminal sends the generation request of the digital currency to the currency management apparatus through the digital currency terminal. The generation request indicates the first denomination of the requested digital currency and the user information corresponding to the digital currency terminal. For example, when the user needs to export a digital currency with a denomination of 10, the first denomination is 10. The user information may be login information of the digital currency terminal. After the user logs in to the digital currency terminal according to the login information, balance information in a digital currency terminal account is obtained. The balance information corresponds to an available currency of the user recorded in the currency management apparatus, so that the currency management apparatus may determine the available currency corresponding to the user according to the user information. It is understandable that the user information is pre-recorded in the currency management apparatus, so that the currency management apparatus generates the digital currency corresponding to the user information according to the generation request.

At S102, the available currency corresponding to the user information and a second denomination of the available currency are determined according to the user information.

The user information may correspond to registration information of the user in the currency management apparatus, the user information corresponds to the unique digital currency account, and the currency management apparatus correspondingly records the digital currency account, the available currency under the digital currency account, and the second denomination of the available currency. It is understandable that the available currency under the digital currency account corresponds to the balance information in the digital currency terminal. When receiving the generation request sent by the digital currency terminal, the currency management apparatus may determine the corresponding available currency and the second denomination of the available currency according to the user information. It is understandable that when a plurality of available currencies are determined, the currency management apparatus may determine the second denomination of each available currency.

At 5103, the digital currency corresponding to the user information and the first denomination is generated according to the available currency and the second denomination of the available currency, and a status of the digital currency is recorded as an export status.

At S104, the digital currency terminal is notified of the digital currency in the export status.

It is worth mentioning that the digital currency in the export status is in a negotiable status. That is, after the currency management apparatus notifies the digital currency terminal of the digital currency in the export status, the user of the digital currency terminal performs various circulation operations on the digital currency, such as making a payment with the digital currency to realize the transfer of a digital currency holder, or directly transferring the digital currency, so that a transferee of the digital currency makes a payment or transfers again with the transferred digital currency. In other words, the digital currency in the export status is equivalent to a traditional paper currency to a certain extent, and its holder has the right to use it.

After the requested digital currency is generated, the currency management apparatus may directly notify the digital currency terminal of the generated digital currency. The contents of the digital currency may include: a unique identifier of the digital currency (such as a serial number), an identifier of the currency management apparatus, and a signature of the currency management apparatus. The currency management apparatus may also generate the unique circulation identifier corresponding to the digital currency, and then send the circulation identifier to the digital currency terminal. The circulation identifier may be in the form of a string or a two-dimensional code, so as to facilitate the circulation of the digital currency. Of course, the currency management apparatus may also record and store the digital currency that has been notified to the digital currency terminal, so as to facilitate the unified management of the digital currency, such as the circulation management of the digital currency.

It is worth mentioning that, in the embodiments of the present disclosure, the available currency recorded by the currency management apparatus is a digital currency in an unexport status. In addition to recording the amount of the available currency, the currency management apparatus also records the total amount of the unique digital currency account corresponding to the user information. The total amount is the sum of the amount of the available currency in the unexport status and the amount of the digital currency in the export status. Of course, the currency management apparatus also records the amount of the digital currency in the export status.

For example, the content of the digital currency account corresponding to the user information 1 recorded in the currency management apparatus is that: the total amount is 100, of which the amount of the available currency in the unexport status is 80, and the amount of the digital currency in the export status is 20. Then, after the currency management apparatus receives the generation request of the digital currency sent by the digital currency terminal corresponding to the user information 1, the currency management apparatus generates, according to the available currency in the unexport status and the second denomination thereof, the digital currency indicated by the generation request of the digital currency. In this example, assuming that the first denomination indicated by the generation request of the digital currency is 30, the currency management apparatus exports the digital currency with the first denomination of 30 according to the amount (80) of the available currency in the unexport status. After exporting the digital currency, the currency management apparatus updates the digital currency account corresponding to the user information 1 as follows: the total amount is 100, of which the amount of the available currency in the unexport status is 50, and the amount of the digital currency in the export status is 50.

Corresponding to the information recorded in the currency management apparatus, the balance information of the digital currency terminal includes: a balance corresponding to the amount of the available currency in the unexport status, a balance corresponding to the amount of the available currency in the export status, and the sum of the above two.

For example, in the digital currency terminal corresponding to the above user information 1, before the digital currency with the first denomination of 30 is exported, the balance information recorded by the digital currency terminal is that: the total amount is 100, of which the balance in the unexport status is 80, and the balance in the export status is 20. After the currency management apparatus returns the digital currency with the first denomination of 30 in the export status according to the generation request, the digital currency terminal updates the balance information as follows: the total amount is 100, of which the balance in the unexport status is 50, and the balance in the export status is 50. Therefore, according to the balance information of the digital currency terminal, the user may determine the first denomination of the digital currency that may be requested to be exported to the currency management apparatus, and may determine the balance of the digital currency that may be configured for circulation.

It is understandable that when displaying the above balance information, the digital currency terminal may select to display all or part of the balance information according to the user customization. For example, the digital currency terminal merely displays the balance in the unexport status, so that the user determines the first denomination of the digital currency that may be requested to be exported. Or the digital currency terminal merely displays the balance of the digital currency in the export status, so that the user determines whether there is a demand for digital currency export. Or the digital currency terminal displays the full content of the above balance information, namely the total amount, the balance in the unexport status, and the balance in the export status.

In another embodiment of the present disclosure, in order to improve the use security of the digital currency, the currency management apparatus may also encrypt the digital currency and/or the circulation identifier. For example, after receiving the generation request sent by the digital currency terminal, the currency management apparatus sends a currency encryption prompt to the digital currency terminal according to the generation request, receives a first encryption instruction sent by the digital currency terminal according to the currency encryption prompt, encrypts the digital currency and/or the circulation identifier according to the first encryption instruction, and notifies the digital currency terminal of the encrypted digital currency and/or the encrypted circulation identifier.

The first encryption instruction indicates an encryption method of the digital currency and a key corresponding to the encryption method. When the digital currency and/or the circulation identifier are/is encrypted, the digital currency and/or the circulation identifier is encrypted by using the key corresponding to the encryption method.

The encryption method may be any at least one of following methods: a string encryption method (alphabetic, numeric, or alphabetic and numeric combined string encryption method), a question and answer method, a voiceprint recognition method, a face recognition method, and a picture recognition method. Different encryption methods correspond to different keys, for example, the key corresponding to the string encryption method is an all-alphabetic string (alphabetic encryption method), or an all-numeric string (digital encryption method), or a string containing both letters and numbers (alphabetic and numeric combined encryption method). The key corresponding to the question and answer method is a combination of one or more pairs of questions and answers. The key corresponding to the voiceprint recognition method is an audio or files in other formats that may represent a voiceprint of the user (such as feature values extracted by a voiceprint recognition model). The key corresponding to the face recognition method is an image or files in other formats that may represent facial features of the user (such as feature values extracted by a face recognition model). And the key corresponding to the picture recognition method is one or more images selected by the user. The user may customize the encryption method, or the currency management apparatus may also define the encryption method according to factors such as ease of management or its own operation situation.

When the user-defined encryption method is adopted, the digital currency terminal carries the user-defined encryption method in the generation request sent to the currency management apparatus, or sends the user-defined encryption method to the currency management apparatus through a separate message. And then the currency management apparatus outputs the corresponding currency encryption prompt to the digital currency terminal according to the encryption method, so that the digital currency terminal displays the currency encryption prompt to the user, and the user enters the key corresponding to the encryption method according to the currency encryption prompt.

In addition, when defining the encryption method, the currency management apparatus may output a list of optional encryption methods to the digital currency terminal. The list may include any one or more of the string encryption method, the question and answer method, the voiceprint recognition method, the face recognition method, and the picture recognition method. It is understandable that the encryption method in the list of encryption methods provided by the currency management apparatus represents the encryption method defined by the currency management apparatus, the user is promoted to select one or more encryption methods, and the key corresponding to the selected one or more encryption methods needs to be entered. Of course, the currency management apparatus may also directly output the currency encryption prompt corresponding to the selected encryption method. For example, if the encryption method selected by the currency management apparatus is the string encryption method, the currency management apparatus may output the currency encryption prompt "Please enter the string to encrypt the digital currency, and the string needs to be an alphabetic and numeric combination" to the digital currency terminal.

After receiving the currency encryption prompt, the digital currency terminal displays the currency encryption prompt to the user, so that the user enters the key corresponding to the encryption method. The digital currency terminal generates the first encryption instruction according to the corresponding encryption method and key, and sends the first encryption instruction to the currency management apparatus. After receiving the first encryption instruction sent by the digital currency terminal, the currency management apparatus encrypts the digital currency and/or the circulation identifier according to the corresponding encryption method and key, and records the encryption method and key corresponding to the digital currency and/or the circulation identifier. For example, when the encryption method is string encryption, the currency management apparatus encrypts the digital currency by using the string (key) entered by the user, and sends the encrypted digital currency to the digital currency terminal. Therefore, when the user uses the digital currency and/or the circulation identifier, the request made by the user to use the digital currency is verified according to the corresponding encryption method and key, so as to improve the use security of the digital currency.

In the implementations of the present disclosure, a generation method of the digital currency is determined according to the second denomination of the available currency and the first denomination, and the digital currency corresponding to the first denomination is generated according to the generation method.

For example, when one of the second denominations of the available currency is equal to the first denomination, the generation method is to identify the available currency with the second denomination equal to the first denomination as the requested digital currency. That is, the available currency with the second denomination equal to the first denomination in the available currency is identified as the digital currency requested by the digital currency terminal.

When the currency management apparatus determines the plurality of available currencies corresponding to the user information, and the second denominations of the plurality of available currencies are equal to the first denomination of the requested digital currency, any one of the available currencies is selected from the plurality of available currencies equal to the first denomination to be identified as the digital currency requested by the digital currency terminal.

The identification of the digital currency mainly refers to the identification of the status of the digital currency. For example, when the currency management apparatus determines the available currency with the second denomination equal to the first denomination, the status of the available currency is identified as an "issued" status or a "circulation" status to represent that the digital currency terminal has been notified of the digital currency, so that the digital currency is in a negotiable status, and the identified digital currency cannot be used as the available currency corresponding to the digital currency requested by the subsequent digital currency terminal. In other words, the identified digital currency cannot be used as the available currency to be identified as the other requested digital currency again. Accordingly, the digital currency that is not identified in the currency management apparatus cannot be directly used for market circulation.

According to the above embodiment, a method for exporting a digital currency provided by the present disclosure may include the following S201 to S204.

At S201, a generation request of a digital currency sent by a digital currency terminal is received. The generation request indicates a first denomination of the requested digital currency and user information corresponding to the digital currency terminal.

At S202, an available currency corresponding to the user information and a second denomination of the available currency are determined according to the user information.

At S203, when one of the second denominations of the available currency is equal to the first denomination, the available currency with the second denomination equal to the first denomination is identified as the requested digital currency.

At S204, the digital currency terminal is notified of the identified digital currency.

In addition, when the second denomination of the available currency in the currency management apparatus is greater than the first denomination, the generation method is to split the available currency with the second denomination greater than the first denomination. For example, the available currency with the second denomination greater than the first denomination is split into a first currency and a second currency, the sum of denominations of the first currency and the second currency is equal to the second denomination of the available currency, the denomination of the first currency is equal to the first denomination, and the first currency is identified as the requested digital currency.

For example, when the second denomination of the available currency corresponding to the user information is 100, and the first denomination of the digital currency requested by the digital currency terminal is 10, the generation method of generating the requested digital currency is to split the available currency with the second denomination greater than the first denomination. That is, the available currency with the second denomination of 100 is split into the first currency with the denomination of 10 and the second currency with the denomination of 90, the denomination of the first currency is equal to the first denomination of the requested digital currency, and then the first currency is identified as the digital currency requested by the digital currency terminal.

In other words, when the currency management apparatus determines the available currency with the second denomination greater than the first denomination in the available currency corresponding to the user information, the available currency with the second denomination greater than the first denomination is split to generate the digital currency corresponding to the requested first denomination. In this case, the method for exporting a digital currency of the embodiments of the present disclosure may include the following S301 to S304.

At S301, a generation request of a digital currency sent by a digital currency terminal is received. The generation request indicates a first denomination of the requested digital currency and user information corresponding to the digital currency terminal.

At S302, an available currency corresponding to the user information and a second denomination of the available currency are determined according to the user information.

At S303, when the second denomination of the available currency is greater than the first denomination, the available currency with the second denomination greater than the first denomination is split into a first currency and a second currency, the sum of denominations of the first currency and the second currency is equal to the second denomination of the available currency, the denomination of the first currency is equal to the first denomination, and the first currency is identified as the requested digital currency.

At S304, the digital currency terminal is notified of the identified first currency.

In addition, when the currency management apparatus has the plurality of available currencies with the second denominations less than the first denomination, the plurality of available currencies corresponding to the user information, the digital currency requested by the digital currency terminal is generated by combining the plurality of digital currencies with the second denominations less than the first denomination.

For example, when the currency management apparatus determines the plurality of available currencies corresponding to the user information as an available currency A and an available currency B, where the second denomination of the available currency A is 2, the second denomination of the available currency B is 8, and the first denomination of the digital currency requested by the digital currency terminal is 10, the available currency A and the available currency B are combined to generate the digital currency requested by the digital currency terminal.

Of course, the denomination obtained by combining the plurality of available currencies with the second denominations less than the first denomination may be greater than the first denomination. That is, the sum of the plurality of second denominations may be greater than the first denomination. For example, when the currency management apparatus determines the plurality of available currencies corresponding to the user information as an available currency C and an available currency C, where the second denomination of the available currency C is 4, the second denomination of the available currency D is 8, and the first denomination of the digital currency requested by the digital currency terminal is 10, at this time, the denomination obtained by combining the available currency C and the available currency D is 12, that is, the combined denomination is greater than the first denomination of 10.

In this case, after the available currency C and the available currency D are combined into a third currency with the denomination of 12, the third currency is split into the first currency with the denomination of 10 and the second currency with the denomination of 2. The splitting process is the same as that the process of splitting the available currency with the second denomination greater than the first denomination, which will not be elaborated herein. Then, the first currency with the denomination of 10 is identified as the digital currency requested by the digital currency terminal. In addition, the first currency with the denomination of 10 and the second currency with the denomination of 2 are generated directly according to the available currency C and the available currency D. Or, one or more available currencies are split first, and then the split available currencies are combined with other available currencies to generate the digital currency corresponding to the first denomination. For example, the available currency D is split into a fourth currency with the denomination of 6 and a fifth currency with the denomination of 2, and then the fourth currency with the denomination of 6 and the available currency D with the denomination of 4 are combined to generate the digital currency corresponding to the first denomination of 10.

Thus, the method for exporting the digital currency of the embodiments of the present disclosure may include the following S401 to S404.

At S401, a generation request of a digital currency sent by a digital currency terminal is received. The generation request indicates a first denomination of the requested digital currency and user information corresponding to the digital currency terminal.

At S402, an available currency corresponding to the user information and a second denomination of the available currency are determined according to the user information.

At S403, the plurality of available currencies with the second denominations less than the first denomination are combined, and the requested data currency is generated according to the combined plurality of available currencies.

At S404, the digital currency terminal is notified of the generated digital currency.

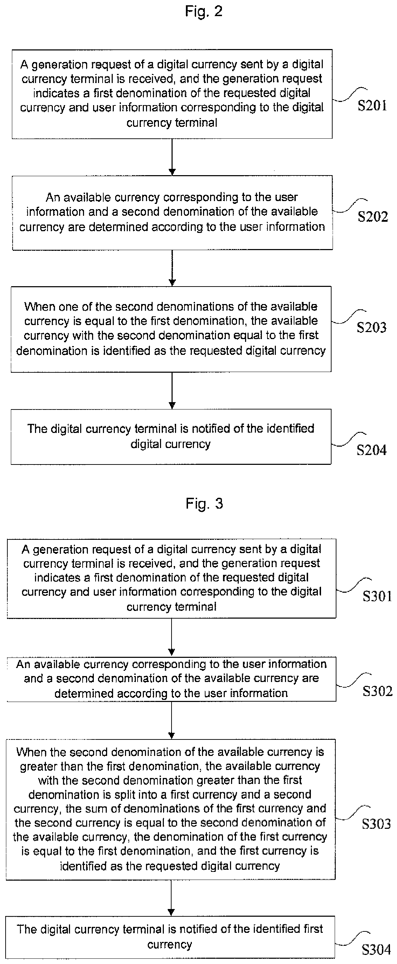

It is worth mentioning that the second denominations of the plurality of available currencies corresponding to the user information determined by the currency management apparatus have a plurality of size relationships with the first denomination requested by the digital currency terminal. For example, there are available currencies with the second denominations equal to the first denomination, or available currencies with the second denominations greater than the first denomination, or available currencies with the second denominations less than the first denomination. At this time, any one of the method for exporting the digital currencies shown in Fig. 2 to Fig. 4 is selected to generate the digital currency requested by the digital currency terminal. That is, the available currency with the second denomination equal to the first denomination is directly identified as the requested digital currency, or the requested digital currency is obtained by splitting the available currency with the second denomination greater than the first denomination, or the requested digital currency is generated according to the combination of the plurality of available currencies with the second denominations less than the first denomination. In one example implementation of the present disclosure, in order to improve the efficiency of digital currency export, when there is the available currency with the second denomination equal to the first denomination, the available currency with the second denomination equal to the first denomination is preferentially identified as the requested digital currency.

According to the method for exporting the digital currency of the embodiments of the present disclosure, the user may send the generation request of the digital currency to the currency management apparatus through the digital currency terminal, and the currency management apparatus may determine, according to the user information indicated by the generation request, the available currency corresponding to the user information and the second denomination of the available currency. The currency management apparatus may generate, according to the available currency and the second denomination of the available currency, the digital currency corresponding to the first denomination of the requested digital currency and the user information of the digital currency terminal, and notify the digital currency terminal of the generated digital currency. Therefore, the digital currency terminal securely and effectively exports the digital currency from the currency management apparatus, which facilitates the user of the digital currency terminal to use the exported digital currency, facilitates the circulation of the digital currency, and improves the user experience of using the digital currency.

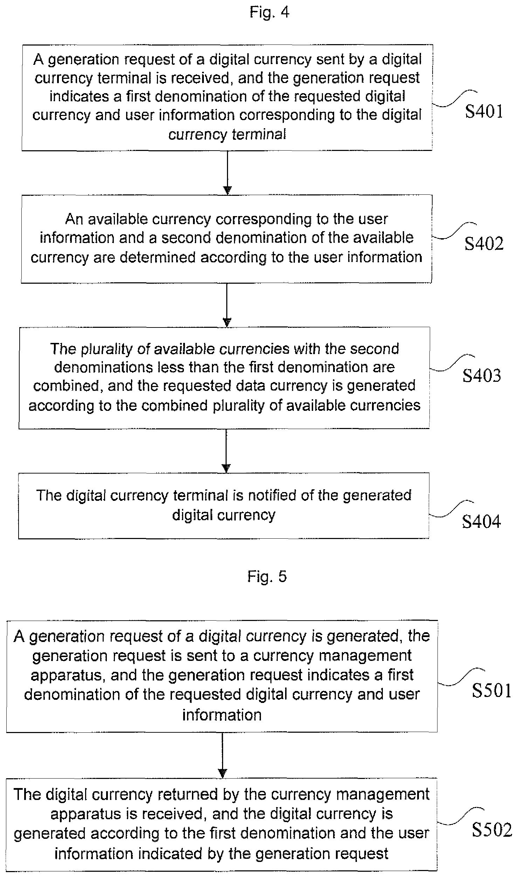

Fig. 5 is a schematic diagram of main steps of a method for exporting a digital currency when applied to a digital currency terminal according to an embodiment of the present disclosure.

As shown in Fig. 5, the method for exporting the digital currency of the embodiments of the present disclosure may include the following steps.

At S501, a generation request of a digital currency is generated, and the generation request is sent to a currency management apparatus. The generation request indicates a first denomination of the requested digital currency and user information.

At S502, the digital currency returned by the currency management apparatus is received. The digital currency is generated according to the first denomination and the user information indicated by the generation request.

According to one implementation of the present disclosure, the currency management apparatus may also generate a unique circulation identifier corresponding to the digital currency, and then send the circulation identifier to the digital currency terminal. The circulation identifier may be in the form of a string or a two-dimensional code. That is, the digital currency terminal may receive the circulation identifier of the digital currency returned by the currency management apparatus, and then display the circulation identifier to the user, so that the user directly uses the digital currency according to the circulation identifier, which facilitates the circulation of the digital currency.

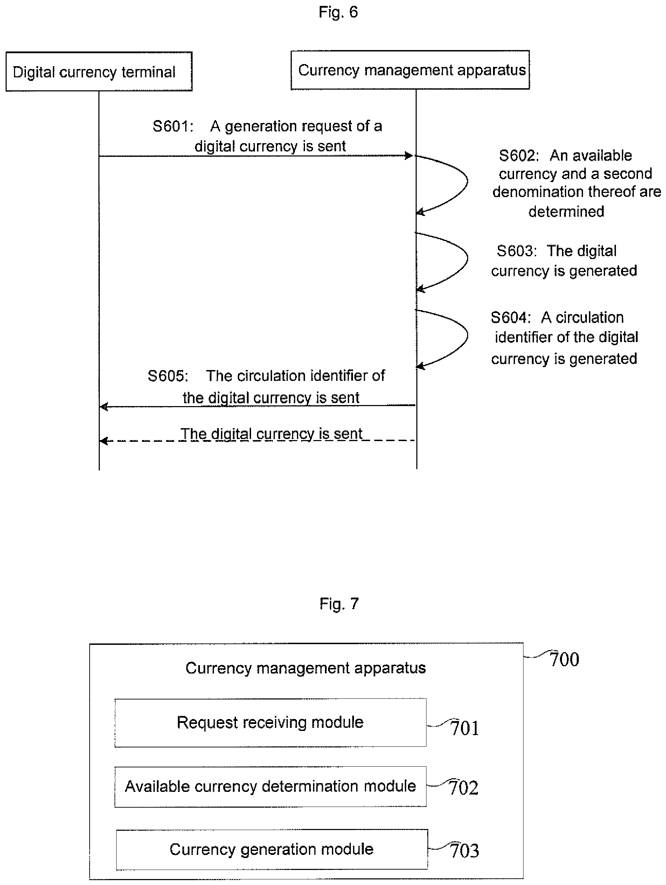

According to the above embodiment, the method for exporting the digital currency provided by the present disclosure may include the steps as shown in Fig. 6.

At S601, a digital currency terminal generates a generation request of a digital currency, and sends the generation request to a currency management apparatus. The generation request indicates a first denomination of the requested digital currency and user information.

At S602, the currency management apparatus determines, according to the user information, an available currency corresponding to the user information and a second denomination of the available currency.

At S603, the currency management apparatus generates, according to the available currency and the second denomination of the available currency, the digital currency corresponding to the user information and the first denomination.

At S604, the currency management apparatus generates a circulation identifier corresponding to the digital currency.

At S605, the digital currency terminal is notified of the circulation identifier of the digital currency.

In the specific implementation process, the currency management apparatus may also omit S604 and directly notify the digital currency terminal of the generated digital currency corresponding to the first denomination. Accordingly, the digital currency terminal may also directly receive the digital currency sent by the currency management apparatus.

In order to improve the use security of the digital currency, the digital currency terminal encrypts the digital currency and/or the circulation identifier of the digital currency according to a second encryption instruction entered by the user. The encryption process is similar to the encryption process of the digital currency and/or the digital currency by the currency management apparatus, which will not be elaborated herein.

It is worth mentioning that the currency management apparatus and the digital currency terminal both encrypt the digital currency and/or the circulation identifier of the digital currency, or only adopt a single-end encryption method. That is, the currency management apparatus encrypts the digital currency and/or the circulation identifier of the digital currency, and the digital currency terminal does not encrypt the digital currency and/or the circulation identifier of the digital currency, or the currency management apparatus does not encrypt the digital currency and/or the circulation identifier of the digital currency, and the digital currency terminal encrypts the digital currency and/or the circulation identifier of the digital currency.

Fig. 7 is a schematic diagram of main modules of a currency management apparatus according to an embodiment of the present disclosure.

As shown in Fig. 7, the currency management apparatus 700 of the embodiments of the present disclosure includes a request receiving module 701, an available currency determination module 702, and a currency generation module 703.

The request receiving module 701 is configured to receive a generation request of a digital currency sent by a digital currency terminal. The generation request indicates a first denomination of the requested digital currency and user information corresponding to the digital currency terminal.

The available currency determination module 702 is configured to determine, according to the user information, an available currency corresponding to the user information and a second denomination of the available currency.

The currency generation module 703 is configured to generate, according to the available currency and the second denomination of the available currency, the digital currency corresponding to the user information and the first denomination, record a status of the digital currency as an export status, and notify the digital currency terminal of the digital currency in the export status.

In one embodiment of the present disclosure, the digital currency generation module 703 is configured to generate a circulation identifier of the digital currency, and notify the digital currency terminal of the circulation identifier.

In one embodiment of the present disclosure, the digital currency generation module 703 is further configured to send a currency encryption prompt to the digital currency terminal according to the generation request, receive a first encryption instruction sent by the digital currency terminal according to the currency encryption prompt, encrypt the digital currency and/or the circulation identifier according to the first encryption instruction, and notify the digital currency terminal of the encrypted digital currency and/or the encrypted circulation identifier.

In one embodiment of the present disclosure, the first encryption instruction indicates an encryption method of the digital currency and a key corresponding to the encryption method. The digital currency generation module 703 is configured to encrypt, according to the encryption method, the digital currency and/or the circulation identifier by using the key corresponding to the encryption method.

In one embodiment of the present disclosure, the digital currency generation module 703 is configured to determine, according to the second denomination of the available currency and the first denomination, a generation method of the digital currency, and generate the digital currency corresponding to the first denomination according to the generation method.

In one embodiment of the present disclosure, the digital currency generation module 703 is configured to determine, when one of the second denominations of the available currency is equal to the first denomination, that the generation method is to identify the available currency with the second denomination equal to the first denomination as the requested digital currency.

In one embodiment of the present disclosure, the digital currency generation module 703 is configured to split the available currency with the second denomination greater than the first denomination into a first currency and a second currency. The sum of denominations of the first currency and the second currency is equal to the second denomination of the available currency, the denomination of the first currency is equal to the first denomination, and the first currency is identified as the requested digital currency.

In one embodiment of the present disclosure, the digital currency generation module 703 is configured to combine the plurality of available currencies with the second denominations less than the first denomination, and generate the requested data currency according to the combined plurality of available currencies.

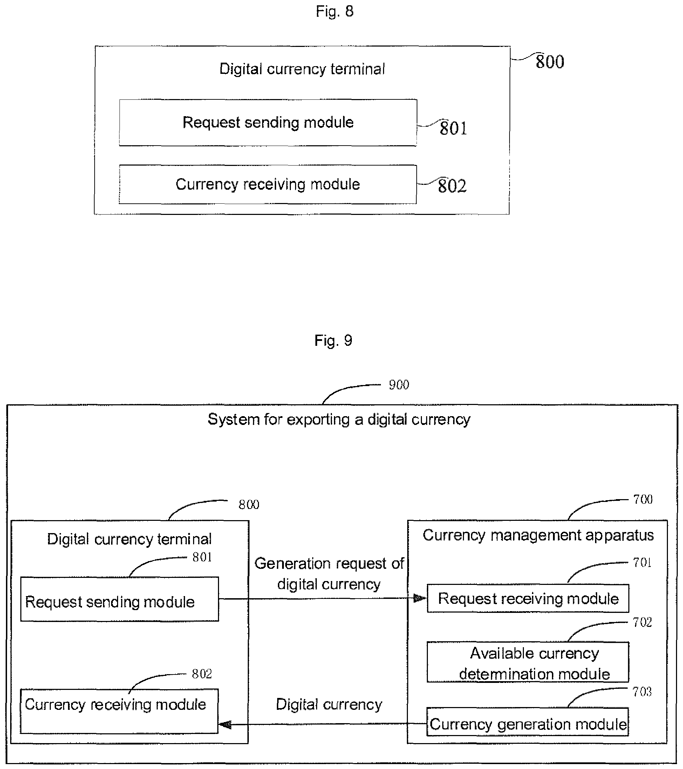

Fig. 8 is a schematic diagram of main modules of a digital currency terminal according to an embodiment of the present disclosure.

As shown Fig. 8, the digital currency terminal 800 of the embodiments of the present disclosure includes a request sending module 801 and a currency receiving module 802.

The request sending module 801 is configured to generate a generation request of a digital currency, and send the generation request to a currency management apparatus. The generation request indicates a first denomination of the requested digital currency and user information corresponding to the digital currency terminal.

The currency receiving module 802 is configured to receive the digital currency returned by the currency management apparatus. The digital currency is generated according to the first denomination and the user information indicated by the generation request.

In one embodiment of the present disclosure, the currency receiving module 802 is further configured to receive a circulation identifier of the digital currency.

In one embodiment of the present disclosure, the currency receiving module 802 is further configured to encrypt, according to a second encryption instruction entered by a user, the digital currency and/or the circulation identifier of the digital currency.

Fig. 9 is a schematic diagram of main modules of a system for exporting a digital currency according to an embodiment of the present disclosure.

As shown Fig. 9, the system for exporting a digital currency 900 of the embodiments of the present disclosure includes a currency management apparatus 700 provided by any of the above embodiments and a digital currency terminal 800 provided by any of the above embodiments.

The digital currency management terminal 800 is configured to send a generation request of a digital currency to the currency management apparatus. The generation request indicates a first denomination of the requested digital currency and user information corresponding to the digital currency terminal.

The currency management apparatus 700 is configured to generate, according to the generation request, the digital currency corresponding to the first denomination and the user information, and notify the digital currency management terminal of the digital currency.

According to the system for exporting the digital currency of the embodiments of the present disclosure, the user may send the generation request of the digital currency to the currency management apparatus through the digital currency terminal, and the currency management apparatus may generate, according to the generation request, the user information indicated by the generation request, determine the available currency corresponding to the user information and the second denomination of the available currency. The currency management apparatus may generate, according to the available currency and the second denomination of the available currency, the digital currency corresponding to the first denomination of the requested digital currency and the user information of the digital currency terminal, and notify the digital currency terminal of the generated digital currency. Therefore, the digital currency terminal securely and effectively exports the digital currency from the currency management apparatus, which facilitates the user of the digital currency terminal to use the exported digital currency, facilitates the circulation of the digital currency, and improves the user experience of using the digital currency.

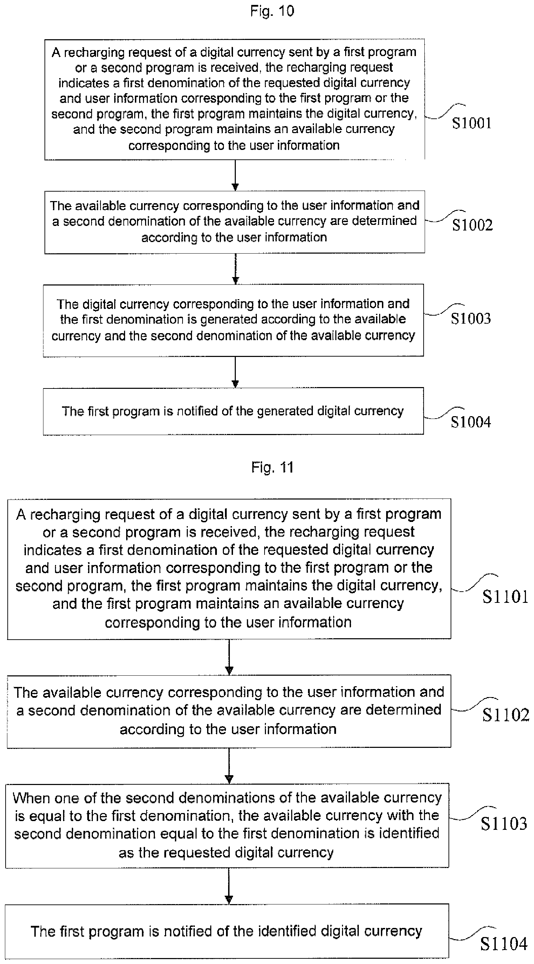

Fig. 10 is a schematic diagram of main steps of a method for recharging a digital currency when applied to a currency management apparatus according to an embodiment of the present disclosure.

As shown in Fig. 10, the method for recharging a digital currency of the embodiments of the present disclosure includes the following steps.

At S1001, a recharging request of a digital currency sent by a first program or a second program is received. The recharging request indicates a first denomination of the requested digital currency and user information corresponding to the first program or the second program. The first program maintains the digital currency, and the first program maintains an available currency corresponding to the user information.

The available currency corresponding to the user information is a currency in the form of non-digital currency, such as a balance of a bank card or a balance corresponding to other currency terminals. The first program for maintaining the digital currency and the second program for maintaining the available currency may be two processes in the same terminal, or correspond to different terminals. It is understandable that when the first program and the second program correspond to the same terminal or different terminals, the corresponding digital currency recharging processes are the same. Therefore, for ease of description, the following embodiments of the present disclosure only take the two processes in the same digital currency terminal corresponding to the first program and the second program as examples.

In the embodiments of the present disclosure, the first program is configured to maintain the digital currency, and the corresponding user information may be associated information of the bank card and background account information associated with the digital currency terminal, so that the available currency corresponding to the user information of the first program may be the balance corresponding to the associated bank card or the balance of the background account. That is, the balance corresponds to the available currency of the user recorded in the currency management apparatus. When the user sends the recharging request to the currency management apparatus through the first program, the currency management apparatus generates the digital currency according to the available currency and the denomination of the available currency. That is, the currency management apparatus only checks the balance of the bank card or the background account balance associated with the user, and does not need to check the balance corresponding to the first program itself, so as to determine whether the user information corresponding to the first program has the right to generate the corresponding digital currency. It is understandable that because the first program maintains the digital currency, the balance corresponding to the first program itself is the denomination of the digital currency existing in the first program.

In addition, the second program maintains the available currency corresponding to the user information, and the user information may be login information of the digital currency terminal. After the user logs in to the terminal according to the login information, balance information in a digital currency terminal account is obtained. The balance information corresponds to an available currency of the user recorded in the currency management apparatus, so that the currency management apparatus may determine the available currency corresponding to the user according to the user information. That is, the available currency corresponding to the user information of the second program is the balance information in the digital currency terminal account.

According to the above embodiment, when the user sends the recharging request of the digital currency to the currency management apparatus through the first program, it indicates that the user wants to recharge the balance in the bank card into the digital currency. Accordingly, when the user sends the recharging request of the digital currency to the currency management apparatus through the second program, it indicates that the user wants to recharge the balance in the digital currency terminal into the digital currency. In the above two scenarios, the user sends the recharging request of the digital currency to the currency management apparatus through the first program or the second program. The recharging request indicates the first denomination of the digital currency and the user information corresponding to the digital currency terminal. For example, when the user needs to recharge the digital currency with the denomination of 10, the first denomination is 10.

At S1002, the available currency corresponding to the user information and the second denomination of the available currency are determined according to the user information.

When the user sends the recharging request through the first program, the user information may be associated information of the bank card associated with the digital currency terminal, so that the available currency corresponding to the user information of the first program may be the balance corresponding to the associated bank card. When the user sends the recharging request through the second program, the user information may correspond to the registration information of the user in the currency management apparatus. The user information corresponds to a unique digital currency account, and the currency management apparatus correspondingly records the digital currency account, the available currency under the digital currency account, and the second denomination of the available currency. When receiving the recharging request sent by the digital currency terminal, the currency management apparatus determines the corresponding available currency and the second denomination of the available currency according to the user information. It is understandable that when a plurality of available currencies are determined, the currency management apparatus determines the second denomination of each available currency.

At S1003, the digital currency corresponding to the user information and the first denomination is generated according to the available currency and the second denomination of the available currency.

At S1004, the first program is notified of the generated digital currency.

In the implementations of the present disclosure, whether the user sends the recharging request to the currency management apparatus through the first program or the second program, the processes of generating the digital currency by the currency management apparatus are consistent. When the currency management apparatus generates the digital currency, a generation method of the digital currency is determined according to the second denomination of the available currency and the first denomination, and the digital currency corresponding to the first denomination is generated according to the generation method.

For example, when one of the second denominations of the available currency is equal to the first denomination, the generation method is to identify the available currency with the second denomination equal to the first denomination as the requested digital currency. That is, the available currency with the second denomination equal to the first denomination in the available currency is identified as the digital currency requested by the first program or the second program.

When the currency management apparatus determines the plurality of available currencies corresponding to the user information, and the second denominations of the plurality of available currencies are equal to the first denomination of the requested digital currency, any one of the available currencies is selected from the plurality of available currencies equal to the first denomination to be identified as the digital currency requested by the first program or the second program.

The identification of the digital currency mainly refers to the identification of the status of the digital currency. For example, when the currency management apparatus determines the available currency with the second denomination equal to the first denomination, the status of the available currency with the second denomination equal to the first denomination is identified as an "issued" status or a "circulation" status to represent that the first program has been notified of the digital currency, so that the digital currency is in the negotiable status, and the identified digital currency cannot be used as the available currency corresponding to the digital currency requested subsequently by the digital currency terminal. In other words, the identified digital currency cannot be used as the available currency to be identified as the other requested digital currency again. Accordingly, the digital currency that is not identified in the currency management apparatus cannot be directly used for market circulation.

According to the above embodiment, a method for recharging a digital currency provided by the present disclosure may include the following S1101 to S1104.

At S1101, a recharging request of a digital currency sent by a first program or a second program is received. The recharging request indicates a first denomination of the requested digital currency and user information corresponding to the first program or the second program. The first program maintains the digital currency, and the first program maintains an available currency corresponding to the user information.

At S1102, the available currency corresponding to the user information and a second denomination of the available currency are determined according to the user information.

At S1103, when one of the second denominations of the available currency is equal to the first denomination, the available currency with the second denomination equal to the first denomination is identified as the requested digital currency.

At S1104, the first program is notified of the identified digital currency.

In addition, when the second denomination of the available currency in a currency management apparatus is greater than the first denomination, the generation method is to split the available currency with the second denomination greater than the first denomination. For example, the available currency with the second denomination greater than the first denomination is split into a first currency and a second currency, the sum of denominations of the first currency and the second currency is equal to the second denomination of the available currency, the denomination of the first currency is equal to the first denomination, and the first currency is identified as the requested digital currency.

For example, when the second denomination of the available currency corresponding to the user information is 100, and the first denomination of the digital currency requested by the digital currency terminal is 10, the generation method of generating the requested digital currency is to split the available currency with the second denomination greater than the first denomination. That is, the available currency with the second denomination of 100 is split into the first currency with the denomination of 10 and the second currency with the denomination of 90, the denomination of the first currency is equal to the first denomination of the requested digital currency, and then the first currency is identified as the digital currency requested by the digital currency terminal.

In other words, when the currency management apparatus determines the available currency with the second denomination greater than the first denomination in the available currencies corresponding to the user information, the available currency with the second denomination greater than the first denomination is split to generate the digital currency corresponding to the requested first denomination. In this case, the method for recharging the digital currency of the embodiments of the present disclosure may include the following S1201 to S1204.

At S1201, a recharging request of a digital currency sent by a first program or a second program is received. The recharging request indicates a first denomination of the requested digital currency and user information corresponding to the first program or the second program. The first program maintains the digital currency, and the first program maintains an available currency corresponding to the user information.

At S1202, the available currency corresponding to the user information and a second denomination of the available currency are determined according to the user information.

At S1203, when the second denomination of the available currency is greater than the first denomination, the available currency with the second denomination greater than the first denomination is split into a first currency and a second currency, the sum of denominations of the first currency and the second currency is equal to the second denomination of the available currency, the denomination of the first currency is equal to the first denomination, and the first currency is identified as the requested digital currency.

At S1204, the first program is notified of the identified first currency.

In addition, when the currency management apparatus has the plurality of available currencies with the second denominations less than the first denomination corresponding to the user information, the digital currency requested by the digital currency terminal may be generated by combining the plurality of digital currencies with the second denominations less than the first denomination.

For example, when the currency management apparatus determines the plurality of available currencies corresponding to the user information as an available currency A and an available currency B, where the second denomination of the available currency A is 2, the second denomination of the available currency B is 8, and the first denomination of the digital currency requested by the digital currency terminal is 10, the available currency A and the available currency B are combined to generate the digital currency requested by the digital currency terminal.

Of course, the denomination obtained by combining the plurality of available currencies with the second denominations less than the first denomination may be greater than the first denomination, that is, the sum of the plurality of second denominations may be greater than the first denomination. For example, when the currency management apparatus determines the plurality of available currencies corresponding to the user information as an available currency C and an available currency C, where the second denomination of the available currency C is 4, the second denomination of the available currency D is 8, and the first denomination of the digital currency requested by the digital currency terminal is 10, at this time, the denomination obtained by combining the available currency C and the available currency D is 12, that is, the combined denomination is greater than the first denomination of 10.

In this case, after the available currency C and the available currency D are combined into a third currency with the denomination of 12, the third currency is split into the first currency with the denomination of 10 and the second currency with the denomination of 2. The splitting process is the same as that the process of splitting the available currency with the second denomination greater than the first denomination, which will not be elaborated herein. Then, the first currency with the denomination of 10 is identified as the digital currency requested by the digital currency terminal. In addition, the first currency with the denomination of 10 and the second currency with the denomination of 2 are generated directly according to the available currency C and the available currency D. Or, one or more available currencies are split first, and then the split available currencies are combined with other available currencies to generate the digital currency corresponding to the first denomination. For example, the available currency D is split into a fourth currency with the denomination of 6 and a fifth currency with the denomination of 2, and then the fourth currency with the denomination of 6 and the available currency D with the denomination of 4 are combined to generate the digital currency corresponding to the first denomination of 10.

Thus, the method for recharging the digital currency of the embodiments of the present disclosure may include the following S1301 to S1304.

At S1301, a recharging request of a digital currency sent by a first program or a second program is received. The recharging request indicates a first denomination of the requested digital currency and user information corresponding to the first program or the second program. The first program maintains the digital currency, and the first program maintains an available currency corresponding to the user information.

At S1302, the available currency corresponding to the user information and a second denomination of the available currency are determined according to the user information.

At S1303, the plurality of available currencies with the second denominations less than the first denomination are combined, and the requested data currency is generated according to the combined plurality of available currencies.

At S1304, the first program is notified of the generated digital currency.

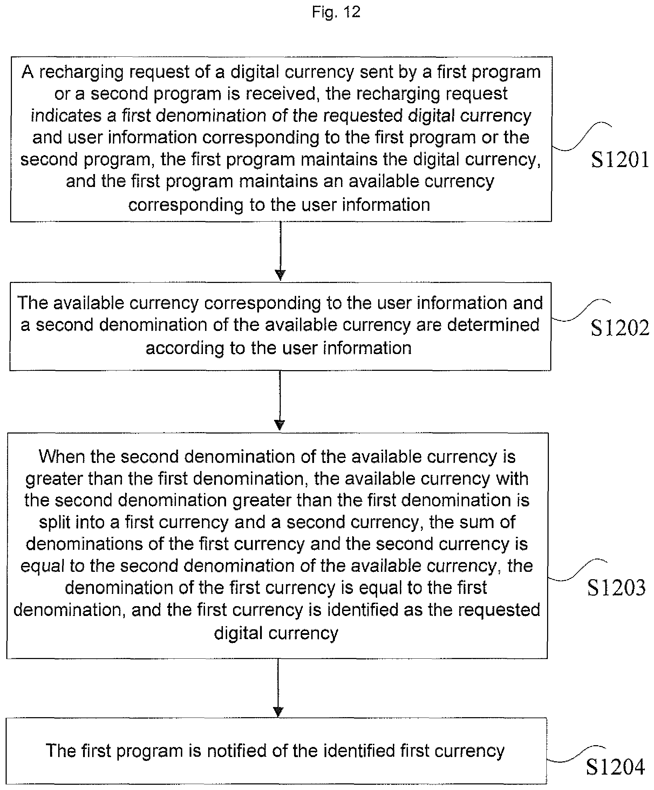

It is worth mentioning that when there are a plurality of available currencies corresponding to the user information determined by a currency management apparatus, the second denominations of the plurality of available currencies have a plurality of size relationships with the first denomination requested by the digital currency terminal. For example, there are available currencies with the second denominations equal to the first denomination, or available currencies with the second denominations greater than the first denomination, or available currencies with the second denominations less than the first denomination. At this time, any one of the method for recharging the digital currencies shown in Fig. 11 to Fig. 13 is selected to generate the digital currency requested by the first program or the second program. That is, the available currency with the second denomination equal to the first denomination is directly identified as the requested digital currency, or the requested digital currency obtained by splitting the available currency with the second denomination greater than the first denomination, or the requested digital currency is generated according to the combination of the plurality of available currencies with the second denominations less than the first denomination. In one preferred implementation of the present disclosure, in order to improve the efficiency of digital currency recharging, when there is the available currency with the second denomination equal to the first denomination, the available currency with the second denomination equal to the first denomination is preferentially identified as the requested digital currency.

Because the first program maintains the digital currency, the subsequent use or transfer process of the digital currency is performed based on the first program, so that after the requested digital currency is generated, the currency management apparatus directly notifies the first program of the digital currency. The contents of the digital currency may include: a unique identifier of the digital currency (such as a serial number), an identifier of the currency management apparatus, and a signature of the currency management apparatus. When the user sends the recharging request to the currency management apparatus through the second program, in order to facilitate notifying the second program of a recharging result of the digital currency, and to facilitate the management of the available currency maintained in the second program, the second program is notified of the generated digital currency, so that the second program notifies the first program of the digital currency.

According to the method for recharging the digital currency of the embodiments of the present disclosure, the user may send the recharging request of the digital currency to the currency management apparatus through the first program for maintaining the digital currency or the second program for maintaining the available currency, and the currency management apparatus may determine, according to the user information indicated by the recharging request, the available currency corresponding to the user information and the second denomination of the available currency. The currency management apparatus may generate, according to the available currency and the second denomination of the available currency, the digital currency corresponding to the first denomination of the requested digital currency and the user information of the digital currency terminal, and notify the first program for maintaining the digital currency of the generated digital currency. Therefore, the available currency is securely and effectively recharged into the digital currency, which facilitates the user of the first program or the second program to use the digital currency formed by recharging, facilitates the circulation of the digital currency, and improve the user experience of using the digital currency.

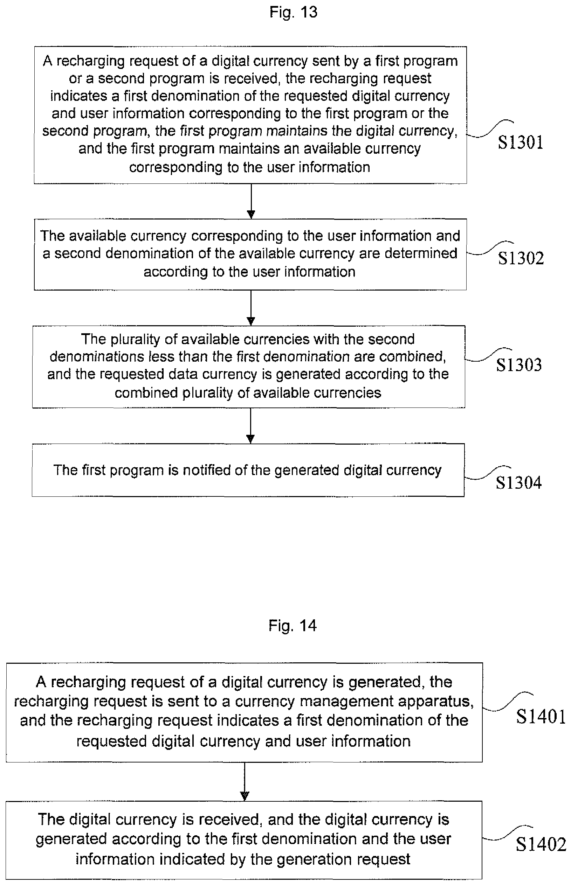

Fig. 14 is a schematic diagram of main steps of a method for recharging a digital currency when applied to a digital currency terminal according to an embodiment of the present disclosure.

As shown in Fig. 14, the method for recharging a digital currency of the embodiments of the present disclosure may include the following steps.

At S1401, a recharging request of a digital currency is generated, and the recharging request is sent to a currency management apparatus. The recharging request indicates a first denomination of the requested digital currency and user information.

At S1402, the digital currency is received. The digital currency is generated according to the first denomination and the user information indicated by the generation request.

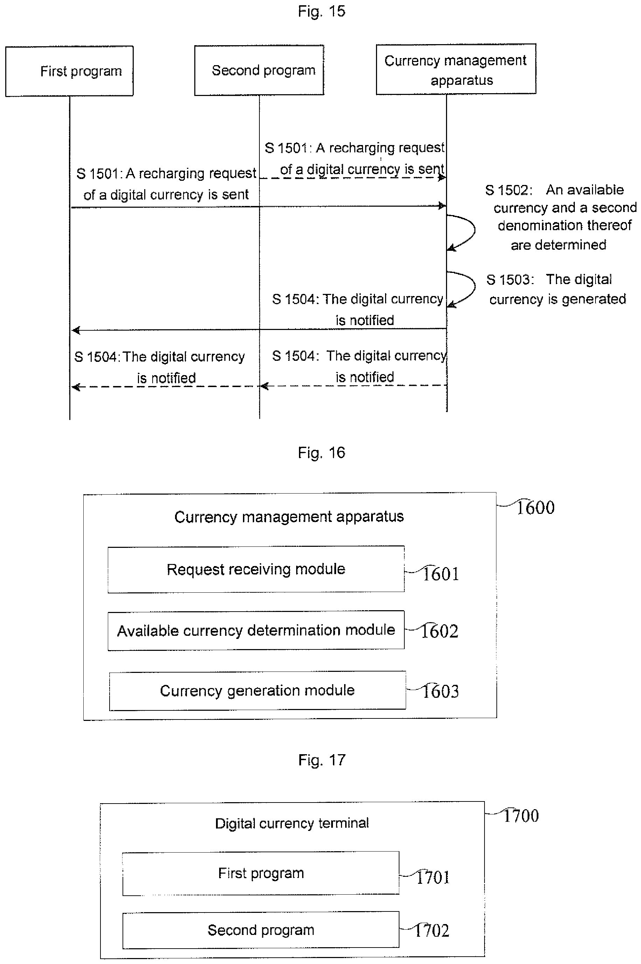

According to the above embodiment, when a first program and a second program correspond to the same digital currency terminal, the method for exporting the digital currency provided by the present disclosure may include the steps as shown in Fig. 15.

At S1501, the first program or the second program in the digital currency terminal generates a recharging request of a digital currency, and sends the recharging request to a currency management apparatus. The recharging request indicates a first denomination of the requested digital currency and user information corresponding to the first program or the second program.

At S1502, a currency management apparatus determines, according to the user information corresponding to the first program or the second program, the available currency corresponding to the user information and a second denomination of the available currency.

At S1503, the currency management apparatus generates, according to the available currency and the second denomination of the available currency, the digital currency corresponding to the user information and the first denomination.

At S1504, the currency management apparatus notifies the first program of the generated digital currency.

In one embodiment of the present disclosure, S1504 may also be implemented by the following way: the currency management apparatus notifies the second program of the generated digital currency, so that the second program notifies the first program of the digital currency.

In one embodiment of the present disclosure, when the recharging request further indicates at least one digital currency in the first program, and a third denomination respectively corresponding to the at least one digital currency, the operation that the first program is notified of the generated digital currency includes that: the at least one digital currency in the first program and the digital currency generated according to the available currency are combined into a new digital currency, and the first program is notified of the new digital currency. A denomination of the new digital currency is the sum of the second denomination and the third denomination respectively corresponding to the at least one digital currency.

In the embodiment, when sending the recharging request of the digital currency, the digital currency existing in the first program of the terminal is sent to the currency management apparatus together, and the currency management apparatus combines the recharging digital currency to be recharged and the digital currency existing in the first program into the new digital currency. The denomination of the new digital currency is the sum of the digital currency existing in the first program and the digital currency to be recharged. For example, before recharging this time, there are two digital currencies in the first program of the terminal, of which denominations are 5 yuan and 6 yuan respectively, and the denomination of the digital currency to be recharged this time is 3 yuan, so that when sending the recharging request of the digital currency, the existing denominations of 5 yuan and 6 yuan in the first program are sent to the currency management apparatus. When generating the new digital currency, the currency management apparatus combines the existing digital currencies of 5 yuan and 6 yuan in the first program, and the digital currency to be recharged with the denomination of 3 yuan into a digital currency of 14 yuan, and then notifies the first program of the new digital currency with the denomination of 14 yuan, so that a digital currency wallet in the terminal (first program), after each recharge, still has only one digital currency, and only the denomination of the digital currency changes with recharging and withdrawn, thereby facilitating the management of the digital currency.

Fig. 16 is a schematic diagram of main modules of a currency management apparatus according to an embodiment of the present disclosure.

As shown in Fig. 16, the currency management apparatus 1600 of the embodiments of the present disclosure includes a request receiving module 1601, an available currency determination module 1602, and a currency generation module 1603.

The request receiving module 1601 is configured to receive a recharging request of a digital currency sent by a first program or a second program. The recharging request indicates a first denomination of the requested digital currency and user information corresponding to the first program or the second program. The first program maintains the digital currency, and the first program maintains an available currency corresponding to the user information.

The available currency determination module 1602 is configured to determine, according to the user information, the available currency corresponding to the user information and a second denomination of the available currency.

The currency generation module 1603 is configured to generate, according to the available currency and the second denomination of the available currency, the digital currency corresponding to the user information and the first denomination, and notify the first program of the generated digital currency.

In one embodiment of the present disclosure, when the recharging request is sent by the second program, the currency generation module 1603 is configured to notify the second program of the generated digital currency, so that the second program notifies the first program of the digital currency.

In one embodiment of the present disclosure, the currency generation module 1603 is configured to determine, according to the second denomination of the available currency and the first denomination, a generation method of the digital currency, and generate the digital currency corresponding to the first denomination according to the generation method.

In one embodiment of the present disclosure, the currency generation module 1603 is configured to determine, when one of the second denominations of the available currency is equal to the first denomination, that the generation method is to identify the available currency with the second denomination equal to the first denomination as the requested digital currency.

In one embodiment of the present disclosure, the currency generation module 1603 is configured to split the available currency with the second denomination greater than the first denomination into a first currency and a second currency. The sum of denominations of the first currency and the second currency is equal to the second denomination of the available currency, the denomination of the first currency is equal to the first denomination, and the first currency is identified as the requested digital currency.

In one embodiment of the present disclosure, the currency generation module 1603 is configured to combine the plurality of available currencies with the second denominations less than the first denomination, and generate the requested data currency according to the combined plurality of available currencies.

In one embodiment of the present disclosure, the currency generation module 1603 is further configured to generate a circulation identifier of the digital currency, and send the circulation identifier to the digital currency terminal.

Fig. 17 is a schematic diagram of main modules of a digital currency terminal according to an embodiment of the present disclosure.

As shown in Fig. 17, the digital currency terminal 1700 of the embodiments of the present disclosure includes a first program 1701 and a second program 1702.

The first program 1701 is configured to generate, when being triggered, a recharging request of a digital currency, and send the recharging request to a currency management apparatus, the recharging request indicating a first denomination of the requested digital currency and user information; and receive the digital currency returned by the currency management apparatus according to the recharging request, and maintain the digital currency.

The second program 1702 is configured to maintain an available currency corresponding to the user information; and generate, when being triggered, the recharging request of the digital currency, and send the recharging request to the currency management apparatus. The recharging request indicates the first denomination of the requested digital currency and the user information.

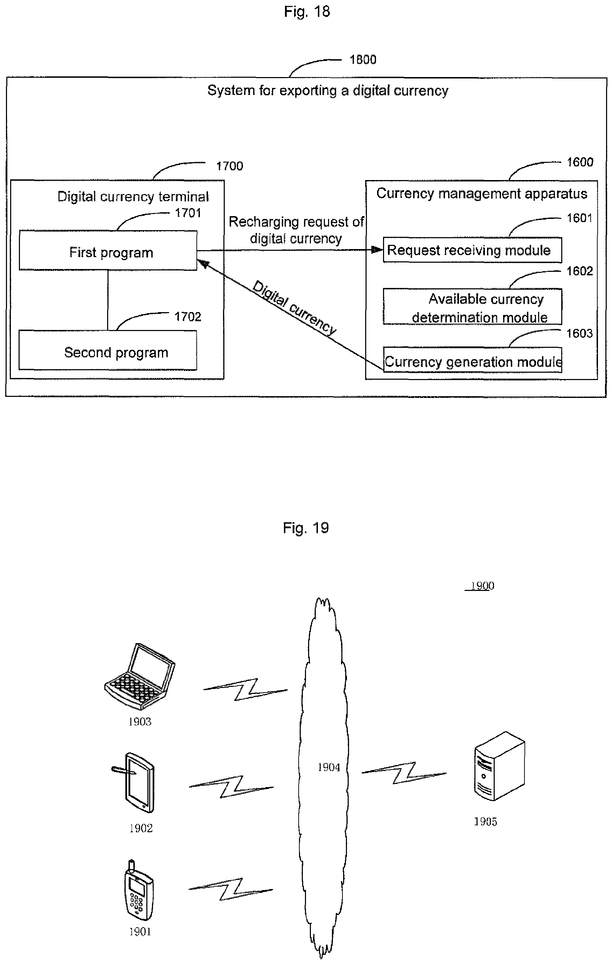

Fig. 18 is a schematic diagram of main modules of a system for recharging a digital currency according to an embodiment of the present disclosure.

As shown Fig. 18, the system for recharging the digital currency 1800 of the embodiments of the present disclosure includes a currency management apparatus 1600 provided by any of the above embodiments and a digital currency terminal 1700 provided by any of the above embodiments.

The digital currency management terminal 1700 is configured to send a recharging request of a digital currency to the currency management apparatus. The recharging request indicates a first denomination of the requested digital currency and user information corresponding to the digital currency terminal.

The currency management apparatus 1600 is configured to generate, according to the generation request, the digital currency corresponding to the first denomination and the user information, and notify a first program for managing the digital currency in the digital currency terminal of the digital currency.

According to the system for recharging the digital currency of the embodiments of the present disclosure, the user may send the recharging request of the digital currency to the currency management apparatus through the first program for maintaining the digital currency or the second program for maintaining the available currency, and the currency management apparatus may determine, according to the user information indicated by the recharging request, the available currency corresponding to the user information and the second denomination of the available currency. The currency management apparatus may generate, according to the available currency and the second denomination of the available currency, the digital currency corresponding to the first denomination of the requested digital currency and the user information of the digital currency terminal, and notify the first program for maintaining the digital currency of the generated digital currency. Therefore, the available currency is securely and effectively recharged into the digital currency, which facilitates the user of the first program or the second program to use the digital currency formed by recharging, facilitates the circulation of the digital currency, and improve the user experience of using the digital currency.

Fig. 19 shows an exemplary system architecture 1900 in which a method for exporting a digital currency or a method for recharging a digital currency or a currency management apparatus according to an embodiment of the present disclosure may be applied.

As shown in Fig. 19, the system architecture 1900 may include terminal devices 1901, 1902 and 1903, a network 1904, and a server 1905. The network 1904 is configured to provide media for communication links between the terminal devices 1901, 1902 and 1903, and the server 1905. The network 1904 may include various connection types, such as wired, wireless communication links, or fiber optic cables.

A user may interact with the server 1905 by using the terminal devices 1901, 1902 and 1903 through the network 1904 to receive or send messages, etc. Various communication client applications, such as shopping applications, web browser applications, search applications, instant messaging tools, email clients, social platform software, etc., may be installed on the terminal devices 1901, 1902 and 1903.

The terminal devices 1901, 1902 and 1903 may be a variety of electronic devices having a display screen and supporting web browsing, including, but is not limited to, smartphones, tablets, laptops, desktops, and the like.

The server 1905 may be a server that provides various services, for example, a background management server that provides support for shopping websites browsed by the user through the terminal devices 1901, 1902 and 1903. The background management server may perform analysis and other processing on received data, such as a product information query request, and feed back a processing result (such as target push information and product information) to the terminal device.

It is to be noted that the method for exporting the digital currency of the embodiments of the present disclosure is generally executed by the server 1905, and accordingly, the currency management apparatus is generally provided in the server 1905.

It is to be understood that the number of terminal devices, networks, and servers in Fig. 19 is merely illustrative. There may be any number of terminal devices, networks, and servers according to implementation requirements.

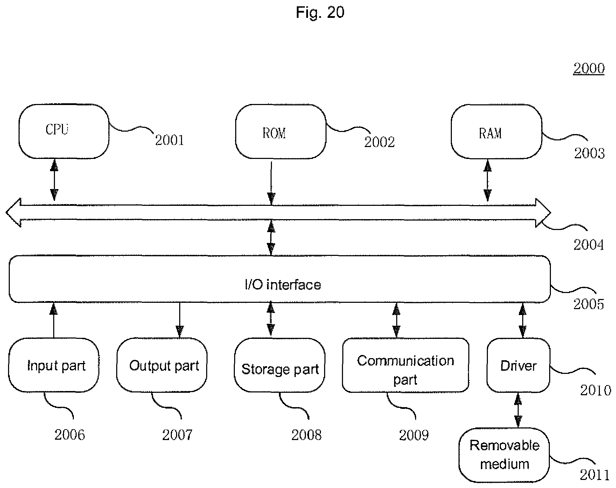

Referring to Fig. 20 below, which shows a schematic structural diagram of a computer system 2000 suitable for implementing a terminal device according to an embodiment of the present disclosure. The terminal device shown in Fig. 20 is merely an example and should not impose any restrictions on the functionality and scope of use of the embodiments of the present disclosure.

As shown in Fig. 20, the computer system 2000 includes a Central Processing Unit (CPU) 2001 that performs various suitable actions and processing according to programs stored in a Read Only Memory (ROM) 2002 or loaded from a storage part 2008 into a Random Access Memory (RAM) 2003. Various programs and data required for the operation of the system 2000 are also stored in the RAM 2003. The CPU 2001, the ROM 2002, and the RAM 2003 are connected to each other through a bus 2004. An Input/Output (I/O) interface 2005 is also connected to the bus 2004.

The following components are connected to the I/O interface 2005: an input part 2006 including a keyboard, a mouse, etc.; an output part 2001 including a Cathode Ray Tube (CRT), a Liquid Crystal Display (LCD), a speaker, etc.; a storage part 2008 including a hard disk, etc.; and a communication part 2009 including a network interface card such as a Local Area Network (LAN) card and a modem. The communication part 2009 performs communication processing via a network such as Internet. A driver 2010 is also connected to the I/O interface 2005 as needed. A removable medium 2020, such as a magnetic disk, an optical disk, a magneto-optical disk, or a semiconductor memory, is installed on the driver 2010 as needed, so that a computer program read therefrom is installed into the storage part 2008 as needed.

In particular, the process described above with reference to a flowchart may be implemented as a computer software program according to the disclosed embodiments of the present disclosure. For example, the disclosed embodiments of the present disclosure include a computer program product including a computer program carried on a computer-readable medium, the computer program including a program code for performing the method shown in the flowchart. In such an embodiment, the computer program may be downloaded and installed from the network via the communication part 2009, and/or from the removable medium 2020. The computer program is executed by the CPU 2001 to perform the functions limited in the system of the present disclosure.

It is to be noted that the computer-readable medium shown in the present disclosure may be either a computer-readable signal medium or a computer-readable storage medium or any combination thereof. The computer-readable storage medium may be, but not limited to, for example, an electrical, magnetic, optical, electromagnetic, infrared, or semiconductor system, apparatus or device, or any combination thereof. More specific examples (a non-exhaustive list) of the computer-readable storage medium may include an electrical connector with one or more wires, a portable disk, a hard disk, an RAM, an ROM, an Erasable Programmable ROM (EPROM or a flash memory), an optical fiber, a Compact Disc ROM (CD-ROM), an optical storage device, a magnetic storage device, or any proper combination thereof. In the present disclosure, the computer-readable storage medium may be any physical medium including or storing a program, and the program may be used by or in combination with an instruction execution system, apparatus or device. However, in the present disclosure, the computer-readable signal medium may include a data signal in a baseband or propagated as part of a carrier, a computer-readable program code being carried therein. A plurality of forms may be adopted for the propagated data signal, including, but not limited to, an electromagnetic signal, an optical signal, or any proper combination. The computer-readable signal medium may also be any readable medium except the computer-readable storage medium, and the computer-readable medium may send, propagate, or transmit a program configured to be used by or in combination with an instruction execution system, apparatus, or device The program code in the computer-readable medium may be transmitted with any proper medium, including, but not limited to, radio, a wire, an optical cable, Radio Frequency (RF), etc., or any proper combination thereof.

The flowcharts and block diagrams in the drawings illustrate the architecture, functionality, and operation of systems, methods, and computer program products that may be realized according to various embodiments of the present disclosure. In this regard, each block in the flowchart or block diagram may represent a module, a program segment, or a portion of a code, which includes one or more executable instructions for implementing the specified logic function. It is also to be noted that in some alternative implementations, the functions marked in the blocks may also occur in a different order from those marked in the drawings. For example, two blocks shown in succession may, in fact, be executed substantially in parallel, and sometimes in a reverse order, depending upon the functionality involved. It is also to be noted that each block in the block diagram or flowchart, and a combination of blocks in the block diagram or flowchart may be implemented by a special purpose hardware-based system which performs a specified function or operation, or a combination of special purpose hardware and computer instructions.

The units described in the embodiments of the present disclosure may be implemented by means of software or hardware. The units described may also be provided in a processor, for example, a processor may be described as including a request receiving unit, an available currency determination module, and a currency generation module. The names of the units do not constitute a limitation on the unit itself in some cases, for example, the request receiving unit may also be described as "a unit receiving a generation request of a digital currency sent by a digital currency terminal".

As another aspect, the present disclosure also provides a computer-readable medium, which may be included in the apparatus described in the above embodiments, or may also be present separately and not fitted into the apparatus. The above computer-readable medium carries one or more programs. One or more above programs are executed by the apparatus to cause the apparatus to include that: a generation request of a digital currency sent by a digital currency terminal is received. The generation request indicates a first denomination of the requested digital currency and user information corresponding to the digital currency terminal; the available currency corresponding to the user information and a second denomination of the available currency are determined according to the user information; the digital currency corresponding to the user information and the first denomination is generated according to the available currency and the second denomination of the available currency; and the digital currency terminal is notified of the generated digital currency.

Or, the recharging request of the digital currency sent by a first program or a second program is received. The recharging request indicates the first denomination of the requested digital currency and the user information corresponding to the first program or the second program. The first program maintains the digital currency, and the second program maintains the available currency corresponding to the user information. The available currency corresponding to the user information and the second denomination of the available currency are determined according to the user information. The digital currency corresponding to the user information and the first denomination is generated according to the available currency and the second denomination of the available currency. The first program is notified of the generated digital currency.

According to the technical solutions in the embodiments of the present disclosure, the user may send the generation request of the digital currency to the currency management apparatus through the digital currency terminal, and the currency management apparatus may determine, according to the user information indicated by the generation request, the available currency corresponding to the user information and the second denomination of the available currency. The currency management apparatus may generate, according to the available currency and the second denomination of the available currency, the digital currency corresponding to the first denomination of the requested digital currency and the user information of the digital currency terminal, and notify the digital currency terminal of the generated digital currency. Therefore, the digital currency terminal securely and effectively exports the digital currency from the currency management apparatus, which facilitates the user of the digital currency terminal to use the exported digital currency, facilitates the circulation of the digital currency, and improves the user experience of using the digital currency.

In addition, the user may send the recharging request of the digital currency to the currency management apparatus through the first program for maintaining the digital currency or the second program for maintaining the available currency, and the currency management apparatus may determine, according to the user information indicated by the recharging request, the available currency corresponding to the user information and the second denomination of the available currency. The currency management apparatus may generate, according to the available currency and the second denomination of the available currency, the digital currency corresponding to the first denomination of the requested digital currency and the user information of the digital currency terminal, and notify the generated digital currency to the first program for maintaining the digital currency. Therefore, the available currency is securely and effectively recharged into the digital currency, which facilitates the user of the first program or the second program to use the digital currency formed by recharging, facilitates the circulation of the digital currency, and improve the user experience of using the digital currency.

The above specific implementation does not constitute a limitation to the scope of protection of the present disclosure. Those skilled in the art should understand that various modifications, combinations, subcombinations, and substitutions can occur, depending upon design requirements and other factors. Any modifications, equivalent substitutions, improvements, etc. within the spirit and scope of the present disclosure shall be included in the scope of protection of the present disclosure.

## Claims

1. A method for exporting a digital currency, comprising:
receiving a generation request of a digital currency sent by a digital currency terminal, wherein the generation request indicates a first denomination of the requested digital currency and user information corresponding to the digital currency terminal;
determining, according to the user information, an available currency corresponding to the user information and a second denomination of the available currency;
generating, according to the available currency and the second denomination of the available currency, the digital currency corresponding to the user information and the first denomination, and recording a status of the digital currency as an export status; and
notifying the digital currency terminal of the digital currency in the export status.

2. The method as claimed in claim 1, wherein the notifying the digital currency terminal of the digital currency in the export status comprises:
generating a circulation identifier of the digital currency, and notifying the digital currency terminal of the circulation identifier.

3. The method as claimed in claim 1 or 2, further comprising:
sending a currency encryption prompt to the digital currency terminal according to the generation request; and
receiving a first encryption instruction sent by the digital currency terminal according to the currency encryption prompt, encrypting the digital currency and/or the circulation identifier according to the first encryption instruction, and notifying the digital currency terminal of the encrypted digital currency and/or the encrypted circulation identifier.

4. The method as claimed in claim 3, wherein the first encryption instruction indicates an encryption method of the digital currency and a key corresponding to the encryption method, and the encrypting the digital currency and/or the circulation identifier according to the first encryption instruction comprises:
encrypting, according to the encryption method, the digital currency and/or the circulation identifier by using the key corresponding to the encryption method.

5. The method as claimed in claim 1, wherein the generating the digital currency corresponding to the user information and the first denomination comprises:
determining a generation method of the digital currency according to the second denomination of the available currency and the first denomination, and generating the digital currency corresponding to the first denomination according to the generation method.

6. The method as claimed in claim 5, wherein the determining the generation method of the digital currency according to the second denomination of the available currency and the first denomination comprises:
when one of the second denominations of the available currency is equal to the first denomination, determining that the generation method is to identify an available currency with the second denomination equal to the first denomination as the requested digital currency.

7. The method as claimed in claim 5, wherein the determining the generation method of the digital currency according to the second denomination of the available currency and the first denomination comprises:
determining that the generation method is to split an available currency with the second denomination greater than the first denomination.

8. The method as claimed in claim 7, wherein,
the available currency with the second denomination greater than the first denomination is split into a first currency and a second currency, a sum of denominations of the first currency and the second currency is equal to the second denomination of the available currency, the denomination of the first currency is equal to the first denomination, and the first currency is identified as the requested digital currency.

9. The method as claimed in claim 5, wherein the determining the generation method of the digital currency according to the second denomination of the available currency and the first denomination comprises:
determining that the generation method is to combine a plurality of available currencies with second denominations less than the first denomination.

10. The method as claimed in claim 9, wherein,
the requested digital currency is generated according to the combined plurality of available currencies.

11. A method for exporting a digital currency, comprising:
generating a generation request of a digital currency, and sending the generation request to a digital currency apparatus, wherein the generation request indicates a first denomination of the requested digital currency and user information; and
receiving the digital currency returned by the currency management apparatus, wherein the digital currency is generated according to the first denomination and the user information indicated by the generation request.

12. The method as claimed in claim 11, further comprising:
receiving a circulation identifier of the digital currency returned by the currency management apparatus.

13. The method as claimed in claim 11 or 12, further comprising:
encrypting, according to a second encryption instruction entered by a user, the digital currency and/or the circulation identifier of the digital currency.

14. A currency management apparatus, comprising a request receiving module, an available currency determination module, and a currency generation module, wherein,
the request receiving module is configured to receive a generation request of a digital currency sent by a digital currency terminal, and the generation request indicates a first denomination of the requested digital currency and user information corresponding to the digital currency terminal;
the available currency determination module is configured to determine, according to the user information, an available currency corresponding to the user information and a second denomination of the available currency; and
the currency generation module is configured to generate, according to the available currency and the second denomination of the available currency, the digital currency corresponding to the user information and the first denomination, record a status of the digital currency as an export status, and notify the digital currency terminal of the digital currency in the export status.

15. A digital currency terminal, comprising a request sending module and a currency receiving module, wherein,
the request sending module is configured to generate a generation request of a digital currency, and send the generation request to a currency management apparatus, wherein the generation request indicates a first denomination of the requested digital currency and user information corresponding to the digital currency terminal; and
the currency receiving module is configured to receive the digital currency returned by the currency management apparatus, and the digital currency is generated according to the first denomination and the user information indicated by the generation request.

16. A system for exporting a digital currency, comprising the currency management apparatus as claimed in claim 14 and the digital currency terminal as claimed in claim 15, wherein,
the digital currency management terminal is configured to send a generation request of a digital currency to the currency management apparatus, wherein the generation request indicates a first denomination of the requested digital currency and user information corresponding to the digital currency terminal; and
the currency management apparatus is configured to generate, according to the generation request, the digital currency corresponding to the first denomination and the user information, and notify the digital currency management terminal of the digital currency.

17. A method for recharging a digital currency, comprising:
receiving a recharging request of a digital currency sent by a first program or a second program, wherein the recharging request indicates a first denomination of the requested digital currency and user information corresponding to the first program or the second program, wherein the first program maintains the digital currency, and the second program maintains an available currency corresponding to the user information;
determining, according to the user information, the available currency corresponding to the user information and a second denomination of the available currency;
generating, according to the available currency and the second denomination of the available currency, the digital currency corresponding to the user information and the first denomination; and
notifying the first program of the generated digital currency.

18. The method as claimed in claim 17, wherein when the recharging request further indicates at least one digital currency in the first program, and a third denomination respectively corresponds to the at least one digital currency, the notifying the first program of the generated digital currency comprises:
combining the at least one digital currency in the first program and the digital currency generated according to the available currency into a new digital currency, and notifying the first program of the new digital currency, wherein a denomination of the new digital currency is a sum of the second denomination and the third denomination respectively corresponding to the at least one digital currency.

19. The method as claimed in claim 17, wherein when the recharging request is sent by the second program,
the second program is notified of the generated digital currency, so that the second program notifies the first program of the digital currency.

20. The method as claimed in claim 17, wherein the generating the digital currency corresponding to the user information and the first denomination comprises:
determining a generation method of the digital currency according to the second denomination of the available currency and the first denomination, and generating the digital currency corresponding to the first denomination according to the generation method.

21. The method as claimed in claim 20, wherein the determining the generation method of the digital currency according to the second denomination of the available currency and the first denomination comprises:
when one of the second denominations of the available currency is equal to the first denomination, determining that the generation method is to identify an available currency with the second denomination equal to the first denomination as the requested digital currency.

22. The method as claimed in claim 20, wherein the determining the generation method of the digital currency according to the second denomination of the available currency and the first denomination comprises:
determining that the generation method is to split an available currency with the second denomination greater than the first denomination.

23. The method as claimed in claim 22, wherein,
the available currency with the second denomination greater than the first denomination is split into a first currency and a second currency, a sum of denominations of the first currency and the second currency is equal to the second denomination of the available currency, the denomination of the first currency is equal to the first denomination, and the first currency is identified as the requested digital currency.

24. The method as claimed in claim 20, wherein the determining the generation method of the digital currency according to the second denomination of the available currency and the first denomination comprises:
determining that the generation method is to combine a plurality of available currencies with the second denominations less than the first denomination.

25. The method as claimed in claim 24, wherein,
the requested digital currency is generated according to the combined plurality of available currencies.

26. A method for recharging a digital currency, comprising:
generating a recharging request of a digital currency, and sending the recharging request to a currency management apparatus, wherein the generation request indicates a first denomination of the requested digital currency and user information; and
receiving the digital currency, wherein the digital currency is generated according to the first denomination and the user information indicated by the generation request.

27. A currency management apparatus, comprising a request receiving module, an available currency determination module, and a currency generation module, wherein,
the request receiving module is configured to receive a recharging request of a digital currency sent by a first program or a second program, wherein the recharging request indicates a first denomination of the requested digital currency and user information corresponding to the first program or the second program, wherein the first program maintains the digital currency, and the second program maintains an available currency corresponding to the user information;
the available currency determination module is configured to determine, according to the user information, the available currency corresponding to the user information and a second denomination of the available currency; and
the currency generation module is configured to generate, according to the available currency and the second denomination of the available currency, the digital currency corresponding to the user information and the first denomination, and notify the first program of the generated digital currency.

28. A digital currency terminal, comprising a first program and a second program, wherein,
the first program is configured to generate, when being triggered, a recharging request of a digital currency, and send the recharging request to a currency management apparatus, wherein the recharging request indicates a first denomination of the requested digital currency and user information; and receive the digital currency returned by the currency management apparatus according to the recharging request, and maintain the digital currency; and
the second program is configured to maintain an available currency corresponding to the user information; and generate, when being triggered, the recharging request of the digital currency, and send the generation request to the currency management apparatus, wherein the recharging request indicates the first denomination of the requested digital currency and the user information.

29. A system for recharging a digital currency, comprising the currency management apparatus as claimed in claim 27 and the digital currency terminal as claimed in claim 28, wherein,
the digital currency management terminal is configured to send a recharging request of a digital currency to the currency management apparatus, wherein the recharging request indicates a first denomination of the requested digital currency and user information corresponding to the digital currency terminal; and
the currency management apparatus is configured to generate, according to the generation request, the digital currency corresponding to the first denomination and the user information, and notify the first program configured to manage the digital currency in the digital currency terminal of the digital currency.

30. An electronic device, comprising:
one or more processors; and
a storage apparatus, configured to store one or more programs;
the one or more programs are executed by the one or more processors to cause the one or more processors to perform the method as claimed in any one of claims 1 to 13 or 16 to 25.

31. A computer readable medium, on which a computer program is stored, wherein the computer program is executed by a processor to perform the method as claimed in any one of claims 1 to 13 or 16 to 25.
